# EUROPEAN PATENT SPECIFICATION

(11) **EP 4 012 865 B1**
(45) Date of publication and mention of the grant of the patent: **11.11.2026**
(21) Application number: 21209605.1
(22) Date of filing: 22.11.2021
(51) Int. Cl.: H02H 3/087

(54) **OVERCURRENT DETECTION CIRCUIT, CORRESPONDING SYSTEM AND METHOD**
ÜBERSTROMDETEKTIONSSCHALTUNG, ENTSPRECHENDES SYSTEM UND VERFAHREN
CIRCUIT DE DÉTECTION DE SURTENSION, SYSTÈME ET PROCÉDÉ CORRESPONDANTS

(30) Priority: 10.12.2020 IT 202000030407
(43) Date of publication of application: 15.06.2022
(73) Proprietor: STMicroelectronics S.r.l., 20864 Agrate Brianza (MB) (IT)
(72) Inventor: ERRICO, Nicola, 20017 Rho (Milano) (IT); GIORDANO, Antonio, 20148 Milano (IT); PENNISI, Orazio, 20090 Pieve Emanuele (Milano) (IT); PEDONE, Leonardo, 62012 Civitanova Marche (Macerata) (IT); FINAZZI, Luca, 24126 Bergamo (IT)
(74) Representative: Buzzi, Notaro & Antonielli d'Oulx S.p.A.

(56) References cited:
- US-A1- 2017 288 662
- US-A1- 2018 366 938
- US-A1- 2020 381 913

## Description

### Technical field

The description relates to overcurrent detection. One or more embodiments may be applied in integrated circuits (ICs), for instance, in automotive applications such as transmission and braking control units and other safety features of motor vehicles.

### Technological background

Drivers with high current capability such as Low-Side (LS) and High-Side (HS) drivers for Engine Management System (EMS) applications can be used in the automotive sector to drive electrical loads such as O₂ heaters and other (e.g., solenoid) loads.

Desired features of these drivers involve protection against short-circuits (briefly "shorts") to supply or ground (GND) and an ability to distinguish between a resistive or "soft" short, which generally derives from some load malfunctioning, and a "hard" short, which indicates a real short-circuit occurring at vehicle chassis level.

Various conventional solutions implement two distinct diagnostic circuits to detect the two different types of faults (soft short and hard short, respectively).

For instance, document US 2017/288662 A1 discloses a system and method for a high-side power switch including a gate driver configured to be coupled to a power switch, a voltage measurement circuit configured to be coupled directly to the power switch, a switch monitoring circuit configured to be coupled to the power switch, the switch monitoring circuit configured to measure an output current of the power switch, a current limitation circuit coupled to the gate driver and the switch monitoring circuit, the current limitation circuit configured to regulate gate-source voltage of the gate driver when the output current exceeds a threshold value, and a controller coupled to the current limitation circuit and the voltage measurement circuit, the controller configured to determine a mode of operation according to a startup voltage measured by the voltage measurement circuit during a startup sequence, the controller further configured to provide the threshold value to the current limitation circuit according to the mode of operation and a switch voltage measured by the voltage measurement circuit

Also, document US 2018/366938 A1 discloses a device including a current sensor, a first current monitor, and a second current monitor. The current sensor is to sense a current between an input node and an output node. The first current monitor is to disconnect the input node from the output node in response to the sensed current exceeding a first threshold current for a period exceeding a threshold period. The second current monitor is to disconnect the input node from the output node in response to the sensed current exceeding a second threshold current greater than the first threshold current.

### Object and summary

An object of one or more embodiments is to address the issues outlined previously, while avoiding the added complexity and cost related to using two distinct circuits for soft shorts and hard shorts.

According to one or more embodiments, such an object can be achieved by means of a circuit having the features set forth in claim 1 that follows.

One or more embodiments may relate to a corresponding system as per claim 6. A drive system for use in the automotive sector may be exemplary of such a system.

One or more embodiments may relate to a corresponding method as per claim 7.

The claims are an integral part of the technical teaching provided herein in respect of the embodiments.

One or more embodiments facilitate distinguishing between different overcurrent scenarios (soft and hard shorts) resorting to a single comparator and digital processing of the signal from the comparator, with the possibility of achieving filter time configurability in order to adapt to different types of loads.

One or more embodiments comprise a single comparator and digital processing of the resulting signal is implemented in order to distinguishing different short(-circuit) scenarios, with the threshold of the comparator initially set to a first, lower value. In response to the fact that this value has been exceeded, the threshold is changed to a second, higher value. A short condition can thus be classified as "soft" or "hard" as a function of whether (also) the second is exceeded.

One or more embodiments may rely on the implementation of a digital code capable of managing and processing information provided by a single analog comparator for both soft and hard overcurrent (short-circuit) events.

One or more embodiments may advantageously provide high configurability of a filter time underlying the fault detection action.

Filter configurability facilitates adaptation to a wide range of load types in providing reliable information to controller circuit such as a MicroController Unit or MCU.

### Brief description of the annexed figures

One or more embodiments will now be described, by way of example only, with reference to the annexed figures, wherein:
Figure 1 is illustrative of a possible context of application of embodiments, not part of the invention,
Figure 2 is a circuit diagram exemplary of implementation of analog circuitry which may be used in short fault diagnosis in embodiments according to the present description, not part of the invention,
Figure 3 is a circuit diagram exemplary of implementation of digital circuitry which may be used in short fault diagnosis in embodiments according to the present invention, and
Figure 4 is a functional flow-chart exemplary of possible operation of embodiments according to the present invention.

### Detailed description of exemplary embodiments

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The headings/references used herein are provided merely for convenience and hence do not define the extent of protection or the scope of the embodiments.

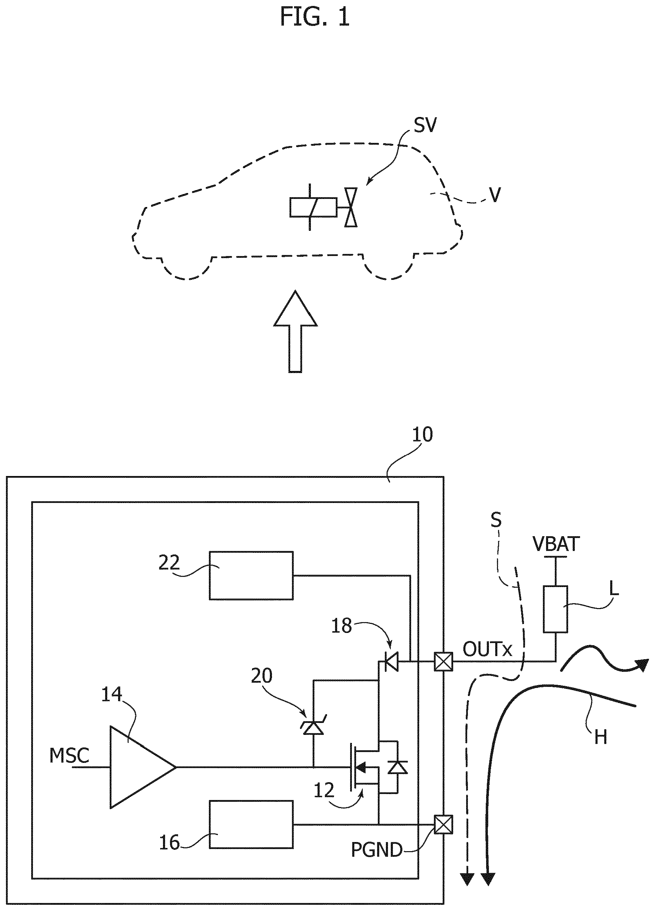

In Figure 1, reference 10 denotes as a whole a circuit configured to control current supply to an electrical load L coupled between a supply voltage VBAT and an output node OUTx of the circuit 10.

In the illustrative representation of Figure 1, such control action is performed by a power component 12 such as an electronic switch (a power MOSFET transistor, for instance) having a current path therethrough (source-drain, in the case of a field-effect transistor such as a MOSFET) providing a current flow line between the node OUTx and a ground node PGND.

In the illustrative representation of Figure 1, the electronic switch 12 has a control terminal (a gate, in the case of a field-effect transistor such as a MOSFET) coupled to a (pre)driver stage 14. The stage 14 is configured to make the switch 12 alternatively conductive and non-conductive, thus controlling current flow through the load L as a function of a command signal MSC from a master system controller (not visible in the figure).

A circuit 10 as illustrated by way of example in Figure 1 may comprise additional circuitry such as ground loss detection circuitry 16 coupled to the ground node PGND of the circuit 10 as well a reverse-current protection diode 18 arranged at the output node OUTx and a Zener diode 20 coupled across the gate and the terminal of the MOSFET 12 coupled to the output node OUTx via the diode 18.

With the exception of the features discussed in the following, a circuit layout as illustrated by way of example in Figure 1 is conventional in the art, which makes it unnecessary to provide a more detailed description herein.

The block 22 in Figure 1 denotes diagnostic circuitry configured to provide various detection and protection functions both in an ON state and in an OFF state of the circuit 10, including overcurrent detection as discussed in the following.

The representation of Figure 1 may correspond, for instance, to LS (Low-Side) and HS (High-Side) drivers used to drive electrical loads used in EMS (Engine Management Systems) in the automotive sector. Such a load is exemplified in Figure 1 by a solenoid valve SV mounted on-board a vehicle V.

It will be otherwise understood that reference to such a possible application is purely exemplary and nonlimiting of the embodiments. One or more embodiments can be generally applied to all types of circuits where the capability of detecting and protecting a circuit (such as an integrated circuit or IC, for instance) against overcurrent (OVC) events is a desirable feature: LS drivers or HS drivers as discussed previously are thus just exemplary of these possible applications.

It is noted that loads having a high current capability - for instance, merely by way of example, O₂ heater (O2H), camshaft or solenoid loads as used in engine management systems in the automotive sector - may suffer from degradation during their life time due to the high amount of current flowing through them.

For that reason, a desirable feature of protection against short(circuits) is the ability to distinguish between:
a "hard" short (H, full line in Figure 1): this generally indicates a fault resulting in the output of the driver being directly shorted to ground or to battery, with a very high current flow, which is limited only by the "on" resistance of the power switch 12 (MOSFET) and the parasitic resistance of the associated cabling, and
a "soft" short (S, dashed line in Figure 1), which generally indicates a degradation or malfunction of the load and results in a current higher than the load capability flowing through the load L, limited by the degraded resistivity of the load.

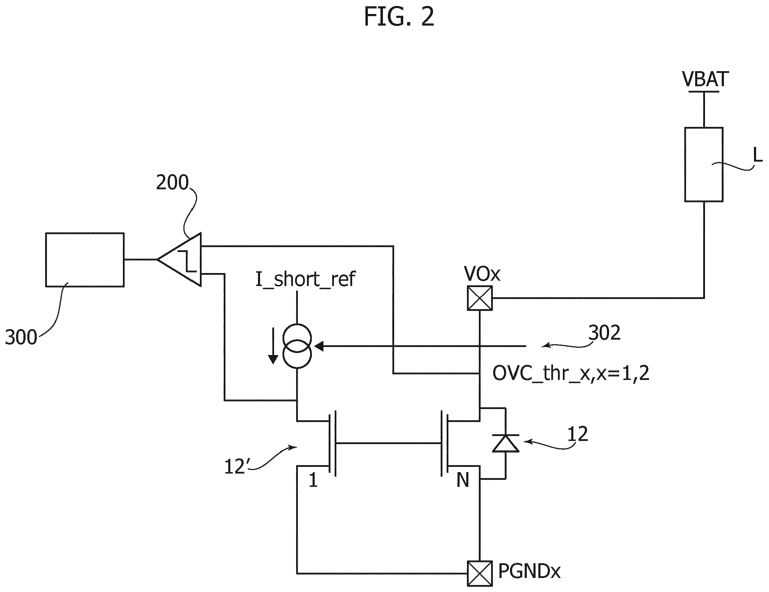

Conventional solutions for short fault diagnosis contemplate - duplicating - distinctly for soft and hard shorts - circuit architecture as exemplified in Figure 2.

In such architecture (which may be included in the block 22 of Figure 1) a short fault is detected by a comparator 200 which compares the voltage drop VOx-PGNDx across the power switch (the V_{DS} of a power MOSFET 12, for instance) with a reference voltage generated via a current through a 1:N current mirror replica of the power MOS (see 12' in Figure 2) through which a reference current, I_short_ref = I_short_load/N, is forced.

When the current I_load through the load L (and the power switch 12) is higher than a threshold value I_short_load, a fault is detected, and the output of the analog comparator 200 is then managed and filtered by logic circuitry 300 configured to switch-off (make non-conductive) the power switch (and possibly assert a related fault flag on a communication interface to a MCU).

As noted, conventional solutions for short fault diagnosis contemplate - duplicating - distinctly for soft and hard shorts, respectively, circuit architecture as exemplified in Figure 2.

In order to distinguish between hard and soft shorts the whole structure (analog plus digital) is thus replicated with multiplicity 2x for each power switch 12 present in an application (which translates into having 2x sense MOS transistors such as 12', 2x current generators for I_short_ref, 2x comparators 200, and 2x logic circuitry 300).

That is, in such conventional solutions, in order to comply with specifications as applicable, for instance, to latest-generation ICs for EMS applications, with the capability of distinguishing between hard shorts and soft short both the analog part and the digital part of the detection structure are 2x replicated: a comparator with its dedicated digital management and filter time is thus implemented to detect hard shorts with a higher threshold and shorter filter time and an additional comparator is implemented with its dedicated digital management to detect soft shorts with a lower threshold and longer filter time.

In applications involving a high multiplicity of drivers in an IC (which is increasingly common in the automotive sector, for instance) the die size impact of full redundancy as discussed previously has a remarkable impact to the IC die size.

In addition, a possible lack of correlation between the two comparators and their thresholds (for soft and hard shorts), which may be set close to each other, may lead to potential undesired mis-detection of a fault and to difficulty in properly managing the fault and protecting the internal circuit.

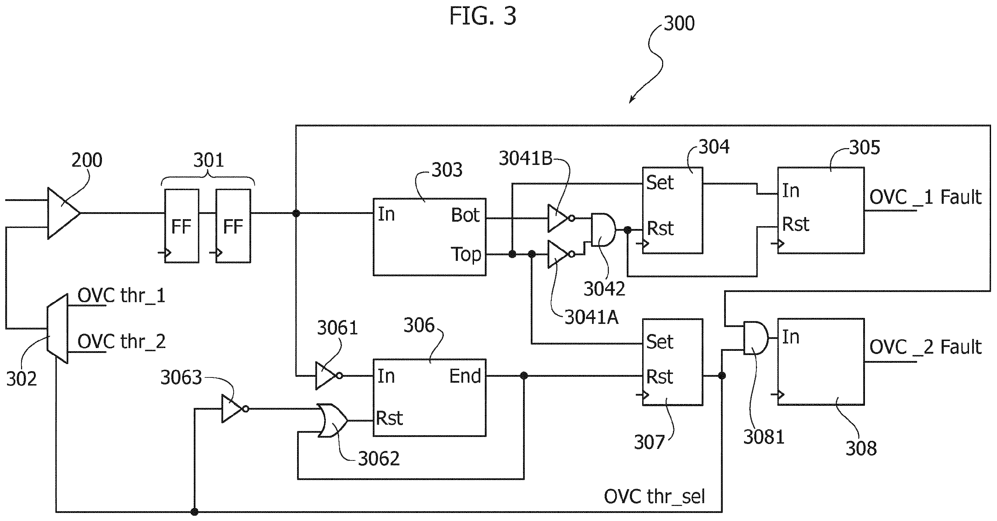

In one or more embodiments, such duplication can be avoided and a same analog portion as exemplified in Figure 2 (including only one reference MOS 12', only one configurable reference current generator I_short_ref and only one comparator 200 can be used for detecting both hard and soft shorts in conjunction with a digital portion 300 as illustrated in Figure 3 to manage the diagnosis.

Briefly, in one or more embodiments, when the power stage is turned-on (for instance in a driver such as 10 in Figure 1) a default threshold can be configured in the reference current generator selected as a lower threshold, able to detect a "soft" short, as a (first) overcurrent threshold (OVC_thr_1).

In case an overcurrent (OVC) event is detected (at the comparator 200), after a short deglitch filter time implemented with an up-down counter, the logic 300 starts a configurable filter time for the overcurrent fault and in the meanwhile configures the reference current generator to detect a "hard" short, for instance a short to battery using a (second), higher overcurrent threshold (OVC_thr_2).

At this point two different situations (CASE A or CASE B) may arise:
CASE A - hard short event: in case of a real short-to- battery fault, the output of the comparator 200 will remain high and in this case the logic 300 will start a second, shorter, filter time for short-to-battery event and assert it if the comparator remains high for the whole up-down counter filter time detecting a short-to-battery event;
CASE B - soft short event: in this case the output from the comparator 200 will go low after changing the threshold to OVC_thr_2 and after a small deglitch filter time the logic 300 will change again the threshold to OVC_thr_1.

If the output from the comparator 200 remains high, the logic 300 will continue to enable the overcurrent filter and set again the threshold to OVC_thr_2. Otherwise, if the comparator goes low, the overcurrent filter will be disabled.

One or more embodiments overcome the drawbacks of conventional duplicated solutions while maintaining the ability to reliably distinguish between hard and soft short events, with an increased flexibility in terms of digital filter time configuration.

Considering a multiplicity of N stages (as exemplified in Figure 1, for instance), in one or more embodiments only N analog comparators 200 can be implemented in the place of 2xN analog comparators as in the case of conventional "duplicated" solutions. This leads to notable savings in terms of die size, with an increased advantage in the presence of a high multiplicity (a high number N of stages), in so far as overhead in terms of additional die size for digital signal management is negligible. One or more embodiments facilitate avoiding fault mis-detection: the thresholds for soft and hard shorts are correlated in so far as they are generated by a same current generator (namely, I_short_ref), checked by a same comparator (namely 200) and managed by a same logic (namely 300).

The block diagram of Figure 3 is illustrative of a possible implementation of logic circuitry 300 configured to cooperate with the analog comparator 200 and:
receive the output from the comparator 200, for instance via synchronization circuitry 301 (a pair of cascaded flip-flops, for instance), and
set the threshold of the comparator alternately to either OVC_thr_1 (lower value, for soft shorts) or OVC_thr_2 (higher value, for hard shorts), which may be via a multiplexer 302.

As illustrated in Figure 3, logic circuitry 300 comprises a first Up-Down counter 303, having a first count threshold cnt_thr_1, which receives at an input In the output from the comparator 200 (for instance via synchronization circuitry 301) and produces top and bottom signals at outputs Top and Bot.

The top signal at the output Top is applied to a Set input of a latch event circuit 304.

The top and bottom signals at the outputs Top and Bot are also supplied via logic inverters 3041A and 3041B to the inputs of an AND gate 3042 whose input is applied to a reset input Rst of a latch event circuit 304.

The output from the latch event circuit 304 is applied to an input In of a first overcurrent filter 305 which receives at a reset input Rst the output signal from the AND gate 3042 and is configured to produce a first overcurrent signal OVC_1 Fault.

As illustrated in Figure 3, logic circuitry 300 comprises a second Up-Down counter 306, having a second count threshold cnt_thr_2, which receives at an input In, via a logic inverter 3061, the output from the comparator 200 and produces an end signal at an End output.

The end signal at the End output of the second Up-Down counter 306 is applied to:
a reset input Rst of a further latch event circuit 307 which receives at a Set input the top signal from the first Up-Down counter 303, and
one of the inputs of an OR gate 3062 which receives at its other input, via a logic inverter 3065, an output signal OVC_thr_set from the further latch event circuit 307.

The output signal OVC_thr_set from the further latch event circuit 307 is also applied to the multiplexer 302 in order to facilitate changing the threshold of the comparator 200 between OVC_thr_1 and OVC_thr_2 as discussed in the following.

The output from the further latch event circuit 307 is applied to an input In of a second overcurrent filter 308 via an AND gate 3081, which receives at its inputs the output from the further latch event circuit 307 and the output from the comparator 200 (for instance, via synchronization circuitry 301).

The second overcurrent filter 308 is configured to produce a second overcurrent signal OVC_2 Fault.

In the exemplary implementation illustrated in Figure 3:
the first counter 303 counts up when its input is equal to 1 and down when is equal to 0; the top output Top is set to 1 when the counter is equal to cnt_thr_1 and the bottom output Bot is set to 1 when the counter reaches cnt_thr_1 and is set to 0 when the counter reaches 0;
the second counter 306 counts up when its input is equal to 1 and down when is equal to 0; the end output at output End is set to 1 when the counter is equal to cnt_thr_2 and the reset input Rst is an asynchronous reset of the counter when is equal to 1;
the output of the latch event circuits 304 and 307 is set to 1 when the Set input is 1 (high priority) and to 0 when reset input Rst is 0 (low priority);
the outputs OVC_1 Fault and OVC_2 Fault from the output filters 305 and 308, respectively, is set to 1 if the input is 1 for the programmed filter time.

It is otherwise noted that the implementation of the logic circuitry 300 illustrated in Figure 3 is merely exemplary: like operation may in fact be facilitated by other implementations which can be devised by those of skill in the art. Also, those of skill in the art will appreciate that, while illustrated as comprised of individual circuit blocks for the ease of explanation and understanding, such a logic circuitry 300 can be implemented, partly or wholly, in software form.

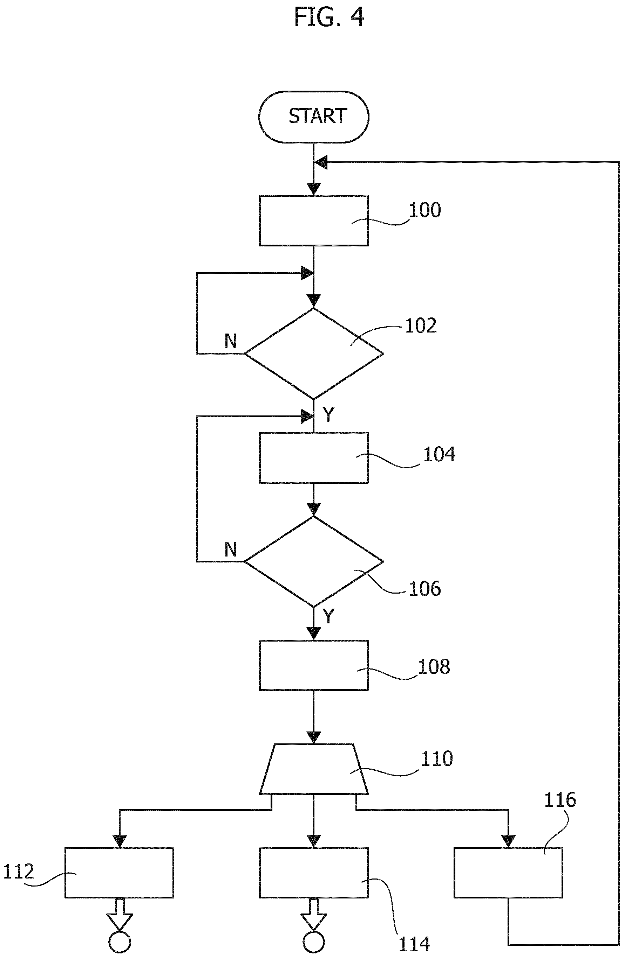

Figure 4 is a functional flow-chart exemplary of possible operation of embodiments as discussed herein.

At start-up, the OVC threshold of the analog comparator 300 is set to the soft short value OVC_thr_1 (step 100).

If a fault event occurs (positive outcome Y at step 102; if no fault event is detected, system operation merely loops back upstream of clock 102) certain initial steps are taken which are the same for both soft and hard shorts.

At a step 104 the output from the analog comparator 200 goes to 1 and (after synchronization) this is used to start the first Up_Down counter 303.

When the count in the counter 303 reaches the threshold "cnt_thr_1" both the top and bottom signals are set to 1 (step 106).

Then the top signal from the counter 303 is used to set both latch event circuits 304 and 307 (step 108).

In response thereto, the latch event circuit 304 is used to start the first time filter 305 to detect a soft short fault and the latch event circuit 307 is used to change the comparator threshold to the hard short value OVC_thr_2 (step 110).

At this point two scenarios are possible, namely: hard short fault, soft short fault, plus a third scenario indicative of a fault being no longer present.

In the case of hard short fault (as represented by block 112):
the output of the analog comparator 200 remains high also with the (higher) hard short threshold applied;
the input of the filter 308 is not masked when the signal OVC_thr_sel is asserted (to 1, for instance) to select the hard short threshold for the comparator 200 so the signal from the comparator 200 is visible;
if the comparator remains high for the filter time configured at 308, a hard fault is detected and the signal OVC_2 Fault is asserted, with actions contemplated in the presence of hard fault taken (power switch 12 turned off, for instance).

In the case of soft short fault (as represented by block 114):
the output from the analog comparator 200 is still high when the (higher) hard short threshold is selected (the comparator takes time to re-settle to 0);
when the output from the comparator 200 is 0 while the hard short threshold is selected, the second Up-Down counter 306 starts to count;
when the second Up-Down counter 306 reaches cnt_thr_2 the threshold of the comparator 200 is switched back to the lower value for soft short;
if a soft short is (still) present, the output from the comparator 200 will become high again after a settling time and the steps discussed above are repeated;
a soft fault is detected and the signal OVC_1 Fault is asserted, with actions contemplated in the presence of soft fault taken if these conditions remain for the filter time set in the filter 305.

While represented distinctly with reference to the blocks 112 and 114 for ease of explanation, the actions contemplated in the presence of a hard short and in the presence of a soft short, respectively, may in fact lead in both instances to turning off the power switch 12 in order to avoid driver damage.

A distinction between the two types of action may in fact lie in the different filtering times: a hard short involves a high fault current likely to result in driver damage in a short time (2 microseconds, for instance), while a soft short involves a lower (mediumhigh) fault current likely to result in driver damage in a longer time (60 microseconds, for instance).

The third scenario represented by block 116 may occur in the case a fault is found to be no longer present.

In such a scenario:
the output from the analog comparator 200 is still high when the (higher) hard short threshold is selected (the comparator takes time to re-settle to 0);
when the output from the comparator 200 is 0 while the hard short threshold is selected, the second Up-Down counter 306 starts to count;
when the count in the second Up-Down counter 306 reaches the value cnt_thr_2, the threshold of the comparator 200 is switched back to the lower value for soft short;
if a soft short is (no longer) present, the output from the analog comparator 200 remains at 0 and the first Up-Down counter 303 starts to count down. In response to the count in the counter 303 reaching 0 both the first latch event circuit 304 and the first filter 305 are reset.

Operation of logic architecture 300 as discussed herein may benefit from configuring the filters 305 and 308 taking into account the settling time of the analog comparator 200.

This may be advantageous when dealing with a possible critical scenario occurring in the presence of a soft short fault with hard short threshold selected. In that case, the output from the analog comparator 200 may go to 0, with the first Up-Down counter 303 starting to count down (from cnt_thr1 to 0) and the second Up-Down counter 308 starting to count up (from 0 to cnt_thr2).

A judicious choice of cnt_thr2 may avoid that this threshold should be unduly high (counting of the counter 306 too long): otherwise, when the threshold is changed back to soft short, the count in the first Up-Down counter 303 will be too low and likely to reach 0 before the analog comparator 200 settles back to 1. This may cause a loop where the threshold of the analog comparator 200 toggles continuously, with no fault detected.

A judicious choice of cnt_thr1 may likewise avoid that this threshold should be unduly high (counting of the counter 303 too long) as this may affect the final detection time for hard short fault that is equal to the sum of cnt_thr1 and the time OVC_flt2 set for the second filter 308. For instance, cnt_thr1 may be chosen to match the comparator settling time and so when the comparator 200 sets to 1 the counter is only, e.g., 1 clock cycle away from reset.

Tuning of cnt_thr1 and cnt_thr2 as desired can be based on simulation with a possible fine tuning in view of the intended application.

In brief, a circuit as exemplified herein comprises:
comparator circuitry (for instance, 200) configured to be coupled (for instance, at the nodes OUTx, VOx) to an electrical load (for instance, L) and to sense (for instance, at 12, 12') a current through the load, the comparator circuitry configured to compare the intensity of the current sensed with a comparison threshold settable (for instance, at 302) to a first threshold value (for instance, OVC_thr_1) and to a second threshold value (for instance, OVC_thr_2), the second threshold value higher than the first threshold value,
logic circuitry (for instance, 300) coupled to the comparator circuitry to receive therefrom a comparison signal having a first value if the intensity of the current sensed is lower than the comparison threshold (for instance, OVC_thr_1 or OVC_thr_2) and a second value if the intensity of the current sensed is higher than the comparison threshold,
wherein the logic circuitry comprises:
   threshold setting circuitry (for instance, 302) configured to set the comparison threshold of the comparator circuitry alternately to the first threshold value (for instance, OVC_thr_1) and to the second threshold value (for instance, OVC_thr_2),
   processing circuitry (for instance, 303 to 308) configured to process the comparison signal from the comparator circuitry, and:
      assert (for instance, 114) a first overcurrent event signal (for instance, OVC_1_Fault) in response to the comparison signal from the comparator circuitry having said second value with the comparison threshold set to the first threshold value and said first value with the comparison threshold set to the second threshold value (OVC_thr_2),
      assert (for instance, 112) a second overcurrent event signal (for instance, OVC_2_Fault) in response to the comparison signal from the comparator circuitry (200) having said second value both with the comparison threshold set to the first threshold value and with the comparison threshold set to the second threshold value.

In a circuit as exemplified herein, the threshold setting circuitry (for instance, 302) may be configured to set the comparison threshold of the comparator circuitry to the second threshold value (for instance, OVC_thr_2) in response to the processing circuitry detecting that the comparison signal from the comparator circuitry has said second value with the comparison threshold set to the first threshold value (for instance, OVC_thr_1).

In a circuit as exemplified herein, the processing circuitry may comprise:
a first time filter circuit (for instance, 305, 303) configured to assert the first overcurrent event signal in response to the comparison signal from the comparator circuitry having said second value with the comparison threshold set to the first threshold value and said first value with the comparison threshold set to the second threshold value for a first time interval,
a second time filter circuit (for instance, 308, 306) configured to assert the second overcurrent event signal in response to the comparison signal from the comparator circuitry having said second value both with the comparison threshold set to the first threshold value and with the comparison threshold set to the second threshold value for a second time interval, wherein said first time interval is longer than said second time interval.

In a circuit as exemplified herein, the processing circuitry may be configured to enable the first time filter circuit concurrently with the threshold setting circuitry setting the comparison threshold of the comparator circuitry to the second threshold value.

In a circuit as exemplified herein, the processing circuitry may be configured to assert (for instance, 116) an end-of-overcurrent-event signal in response to the comparison signal from the comparator circuitry having said first value with the comparison threshold set to the second threshold value.

A system as exemplified herein (a drive system for use in the automotive sector may be exemplary of such a system) comprises:
an electrical load (for instance, L),
a driver circuit (for instance, 10) coupled (for instance, at OUTx, VOx) to the electrical load, the driver circuit configured (for instance, via the switch 12) to control current flow through the electrical load, wherein the driver circuit comprises a circuit (for instance, 200, 300) as exemplified herein having said comparator circuitry (for instance, 200) coupled (for instance, at OUTx, VOx) to the electrical load to sense (for instance, at 12, 12') the current flowing through the load,
wherein the driver circuit may be configured to counter an overcurrent flowing through the load selectively:
   in a first overcurrent mode (for instance, 114), in response to said first overcurrent event signal (for instance, OVC_1_Fault) being asserted, or
   in a second overcurrent mode (for instance, 112), in response to said second overcurrent event signal (for instance, OVC_2_Fault) being asserted.

A method of operating a circuit or a system as exemplified herein comprises:
operating said comparator circuitry (for instance, 200) to compare the intensity of the current sensed with said comparison threshold setting said comparison threshold alternately to the first threshold value (for instance, OVC_thr_1) and to the second threshold value (for instance, OVC_thr_2),
detecting assertion of said first overcurrent event signal (for instance, OVC_1_Fault) or said second overcurrent event signal (for instance, OVC_2_Fault) by said processing circuitry (for instance, 303 to 308),
declaring a soft short-circuit occurring at the electrical load in response to the first overcurrent event signal (for instance, OVC_1_Fault) asserted, and
declaring a hard short-circuit occurring at the electrical load in response to the second overcurrent event signal (for instance, OVC_2_Fault) being asserted.

Without prejudice to the underlying principles, the details and embodiments may vary, even significantly, with respect to what has been described by way of example only, without departing from the extent of protection.

The extent of protection is determined by the annexed claims.

## Claims

1. A circuit, comprising:
comparator circuitry (200) configured to be coupled (OUTx, VOx) to an electrical load (L) and to sense (12, 12') a current through the load (L), the comparator circuitry (200) configured to compare the intensity of the current sensed with a comparison threshold settable (302) to a first threshold value (OVC_thr_1) and to a second threshold value (OVC_thr_2), the second threshold value (OVC_thr_2) higher than the first threshold value (OVC_thr_1),
logic circuitry (300) coupled to the comparator circuitry (200) to receive therefrom a comparison signal having a first value if the intensity of the current sensed is lower than the comparison threshold (OVC_thr_1, OVC_thr_2) and a second value if the intensity of the current sensed is higher than the comparison threshold (OVC_thr_1, OVC_thr_2),
wherein the logic circuitry (300) comprises:
threshold setting circuitry (302) configured to set the comparison threshold (OVC_thr_1, OVC_thr_2) of the comparator circuitry (200) alternately to the first threshold value (OVC_thr_1) and to the second threshold value (OVC thr 2),
processing circuitry (303 to 308) configured to process the comparison signal from the comparator circuitry (200), and:
assert (114) a first overcurrent event signal (OVC_1_Fault) in response to the comparison signal from the comparator circuitry (200) having said second value with the comparison threshold (OVC_thr_1, OVC_thr_2) set to the first threshold value (OVC_thr_1) and thereafter having said first value with the comparison threshold (OVC_thr_1, OVC_thr_2) subsequently set to the second threshold value (OVC_thr_2),
assert (112) a second overcurrent event signal (OVC_2_Fault) in response to the comparison signal from the comparator circuitry (200) having said second value both with the comparison threshold (OVC_thr_1, OVC_thr_2) set to the first threshold value (OVC_thr_1) and still having said second value with the comparison threshold (OVC_thr_1, OVC_thr_2) thereafter set to the second threshold value (OVC_thr_2).

2. The circuit of claim 1, wherein the threshold setting circuitry (302) is configured to set the comparison threshold of the comparator circuitry (200) to the second threshold value (OVC_thr_2) in response to the processing circuitry (303 to 308) detecting that the comparison signal from the comparator circuitry (200) has said second value with the comparison threshold (OVC_thr_1, OVC_thr_2) set to the first threshold value (OVC_thr_1).

3. The circuit of claim 1 or claim 2, wherein the processing circuitry (303 to 308) comprises:
a first time filter circuit (305, 303) configured to assert the first overcurrent event signal (OVC_1_Fault) in response to the comparison signal from the comparator circuitry (200) having said second value with the comparison threshold (OVC_thr_1, OVC_thr_2) set to the first threshold value (OVC_thr_1) and said first value with the comparison threshold (OVC_thr_1, OVC_thr_2) set to the second threshold value (OVC_thr_2) for a first time interval,
a second time filter circuit (308, 306) configured to assert the second overcurrent event signal (OVC_2_Fault) in response to the comparison signal from the comparator circuitry (200) having said second value both with the comparison threshold (OVC_thr_1, OVC_thr_2) set to the first threshold value (OVC_thr_1) and with the comparison threshold (OVC_thr_1, OVC_thr_2) set to the second threshold value (OVC_thr_2) for a second time interval, wherein said first time interval is longer than said second time interval.

4. The circuit of claim 3, wherein the processing circuitry (303 to 308) is configured to enable the first time filter circuit (305, 303) concurrently with the threshold setting circuitry (302) setting the comparison threshold (OVC_thr_1, OVC_thr_2) of the comparator circuitry (200) to the second threshold value (OVC_thr_2).

5. The circuit of any of the previous claims, wherein the processing circuitry (303 to 308) is configured to assert (116) an end-of-overcurrent-event signal in response to the comparison signal from the comparator circuitry (200) having said first value with the comparison threshold (OVC_thr_1, OVC_thr_2) set to the second threshold value (OVC_thr_2).

6. A system, comprising:
an electrical load (L),
a driver circuit (10) coupled (OUTx, VOx) to the electrical load (L), the driver circuit (10) configured (12) to control current flow through the electrical load (L), wherein the driver circuit (10) comprises a circuit (200, 300) according to any of claims 1 to 5 having said comparator circuitry (200) coupled (OUTx, VOx) to the electrical load (L) to sense (12, 12') the current flowing through the load (L),
wherein the driver circuit (10) is configured to counter an overcurrent flowing through the load (L) selectively:
in a first overcurrent mode (114), in response to said first overcurrent event signal (OVC_1_Fault) being asserted, or
in a second overcurrent mode (112), in response to said second overcurrent event signal (OVC_2_Fault) being asserted.

7. A method of operating a circuit (200, 300) according to any of claims 1 to 5 or a system according to claim 6, the method comprising:
operating said comparator circuitry (200) to compare the intensity of the current sensed with said comparison threshold, setting said comparison threshold alternately to the first threshold value (OVC_thr_1) and to the second threshold value (OVC_thr_2),
detecting assertion of said first overcurrent event signal (OVC_1_Fault) or said second overcurrent event signal (OVC_2_Fault) by said processing circuitry (303 to 308),
declaring a soft short-circuit occurring at the electrical load (L) in response to the first overcurrent event signal (OVC_1_Fault) asserted, and
declaring a hard short-circuit occurring at the electrical load (L) in response to the second overcurrent event signal (OVC_2_Fault) being asserted.

## Patentansprüche

1. Schaltung, umfassend:
einen Vergleichsschaltkreis (200), der so konfiguriert ist, dass er mit einer elektrischen Last (L) gekoppelt wird (OUTx, VOx) und durch die Last (L) einen Strom erfasst (12, 12'), wobei der Vergleichsschaltkreis (200) so konfiguriert ist, dass er die Intensität des erfassten Stroms mit einem Vergleichsschwellenwert (302) vergleicht, der auf einen ersten Schwellenwert (OVC_thr_1) und einen zweiten Schwellenwert (OVC_thr_2) einstellbar ist, wobei der zweite Schwellenwert (OVC_thr_2) höher ist als der erste Schwellenwert (OVC_thr_1),
einen Logikschaltkreis (300), der mit dem Vergleichsschaltkreis (200) gekoppelt ist, um von diesem ein Vergleichssignal zu empfangen, das einen ersten Wert, wenn die Intensität des erfassten Stroms niedriger als der Vergleichsschwellenwert (OVC_thr_1, OVC_thr_2) ist, und einen zweiten Wert aufweist, wenn die Intensität des erfassten Stroms höher als der Vergleichsschwellenwert (OVC_thr_1, OVC_thr_2) ist,
wobei der Logikschaltkreis (300) umfasst:
einen Schwellenwert-Einstellschaltkreis (302), der so konfiguriert ist, dass er den Vergleichsschwellenwert (OVC_thr_1, OVC_thr_2) des Vergleichsschaltkreises (200) abwechselnd auf den ersten Schwellenwert (OVC_thr_1) und auf den zweiten Schwellenwert (OVC_thr_2) einstellt,
einen Verarbeitungsschaltkreis (303 bis 308), der so konfiguriert sind, dass er das Vergleichssignal von dem Vergleichsschaltkreis (200) verarbeitet, und:
ein erstes Überstrom-Ereignissignal (OVC_1_Fault) als Reaktion darauf aktiviert (114), dass das Vergleichssignal von dem Vergleichsschaltkreis (200) den zweiten Wert aufweist, wenn der Vergleichsschwellenwert (OVC_thr_1, OVC_thr_2) auf den ersten Schwellenwert (OVC_thr_1) eingestellt ist, und danach den ersten Wert aufweist, wenn der Vergleichsschwellenwert (OVC_thr_1, OVC_thr_2) anschließend auf den zweiten Schwellenwert (OVC_thr_2) eingestellt wird,
ein zweites Überstromereignis-Signal (OVC_2_Fault) als Reaktion darauf aktiviert (112), dass das Vergleichssignal von dem Vergleichsschaltkreis (200) sowohl den zweiten Wert aufweist, wenn der Vergleichsschwellenwert (OVC_thr_1, OVC_thr_2) auf den ersten Schwellenwert (OVC_thr_1) eingestellt ist, als auch weiterhin den zweiten Wert aufweist, wenn der Vergleichsschwellenwert (OVC_thr_1, OVC_thr_2) anschließend auf den zweiten Schwellenwert (OVC_thr_2) eingestellt wird.

2. Schaltung nach Anspruch 1, wobei der Schwellenwert-Einstellschaltkreis (302) so konfiguriert ist, dass er den Vergleichsschwellenwert des Vergleichsschaltkreises (200) auf den zweiten Schwellenwert (OVC_thr_2) einstellt, als Reaktion darauf, dass der Verarbeitungsschaltkreis (303 bis 308) erkennt, dass das Vergleichssignal von dem Vergleichsschaltkreis (200) den zweiten Wert aufweist, wenn der Vergleichsschwellenwert (OVC_thr_1, OVC_thr_2) auf den ersten Schwellenwert (OVC_thr_1) eingestellt ist.

3. Schaltung nach Anspruch 1 oder Anspruch 2, wobei der Verarbeitungsschaltkreis (303 bis 308) umfasst:
eine Erststufen-Filterschaltung (305, 303), die so konfiguriert ist, dass sie das erste Überstrom-Ereignissignal (OVC_1_Fault) während eines ersten Zeitintervalls als Reaktion darauf aktiviert, dass das Vergleichssignal von dem Vergleichsschaltkreis (200) den zweiten Wert aufweist, wenn der Vergleichsschwellenwert (OVC_thr_1, OVC_thr_2) auf den ersten Schwellenwert (OVC_thr_1) eingestellt ist, und den ersten Wert aufweist, wenn der Vergleichsschwellenwert (OVC_thr_1, OVC_thr_2) auf den zweiten Schwellenwert (OVC_thr_2) eingestellt ist, eine Zweitstufen-Filterschaltung (308, 306), die so konfiguriert ist, dass sie das zweite Überstrom-Ereignissignal (OVC_2_Fault) während eines zweiten Zeitintervalls als Reaktion darauf aktiviert, dass das Vergleichssignal von dem Vergleichsschaltkreis (200) den zweiten Wert aufweist, sowohl wenn der Vergleichsschwellenwert (OVC_thr_1, OVC_thr_2) auf den ersten Schwellenwert (OVC_thr_1) eingestellt ist als auch wenn der Vergleichsschwellenwert (OVC_thr_1, OVC_thr_2) auf den zweiten Schwellenwert (OVC_thr_2) eingestellt ist, wobei das erste Zeitintervall länger ist als das zweite Zeitintervall.

4. Schaltung nach Anspruch 3, wobei der Verarbeitungsschaltkreis (303 bis 308) so konfiguriert ist, dass er die Erststufen-Filterschaltung (305, 303) gleichzeitig mit dem Schwellenwert-Einstellschaltkreis (302) einschaltet, der den Vergleichsschwellenwert (OVC_thr_1, OVC_thr_2) von dem Vergleichsschaltkreis (200) auf den zweiten Schwellenwert (OVC_thr_2) einstellt.

5. Schaltung nach einem der vorherigen Ansprüche, wobei der Verarbeitungsschaltkreis (303 bis 308) so konfiguriert ist, dass er ein Signal zum Ende des Überstromereignisses (116) als Reaktion darauf ausgibt, dass das Vergleichssignal von dem Vergleichsschaltkreis (200) den ersten Wert aufweist, wenn der Vergleichsschwellenwert (OVC_thr_1, OVC_thr_2) auf den zweiten Schwellenwert (OVC_thr_2) eingestellt ist.

6. System, umfassend:
eine elektrische Last (L),
eine Treiberschaltung (10), die mit der elektrischen Last (L) gekoppelt ist (OUTx, VOx), wobei die Treiberschaltung (10) so konfiguriert ist (12), dass sie den Stromfluss durch die elektrische Last (L) steuert, wobei die Treiberschaltung (10) eine Schaltung (200, 300) nach einem der Ansprüche 1 bis 5 umfasst, dessen Vergleichsschaltkreis (200) mit der elektrischen Last (L) gekoppelt ist (OUTx, VOx), um den durch die Last (L) fließenden Strom zu erfassen (12, 12'),
wobei die Treiberschaltung (10) so konfiguriert ist, dass sie einen durch die Last (L) fließenden Überstrom selektiv entgegenwirkt:
in einem ersten Überstrommodus (114) als Reaktion darauf, dass das erste Überstrom-Ereignissignal (OVC_1_Fault) aktiviert wird, oder
in einem zweiten Überstrommodus (112) als Reaktion darauf, dass das zweite Überstrom-Ereignissignal (OVC_2_Fault) aktiviert wird.

7. Verfahren zum Betreiben einer Schaltung (200, 300) nach einem der Ansprüche 1 bis 5 oder eines Systems nach Anspruch 6, wobei das Verfahren Folgendes umfasst:
Betreiben des Vergleichsschaltkreis (200), um die Intensität des erfassten Stroms mit dem Vergleichsschwellenwert zu vergleichen, wobei der Vergleichsschwellenwert abwechselnd auf den ersten Schwellenwert (OVC_thr_1) und auf den zweiten Schwellenwert (OVC_thr_2) eingestellt wird,
Erkennen der Aktivierung des ersten Überstrom-Ereignissignals (OVC_1_Fault) oder des zweiten Überstrom-Ereignissignals (OVC_2_Fault) durch den Verarbeitungsschaltkreis (303 bis 308),
Melden eines weichen Kurzschlusses, der an der elektrischen Last (L) als Reaktion darauf auftritt, dass das erste Überstrom-Ereignissignal (OVC_1_Fault) aktiviert ist,
Melden eines harten Kurzschlusses, der an der elektrischen Last (L) als Reaktion darauf auftritt, dass das zweite Überstrom-Ereignissignal (OVC_2_Fault) aktiviert ist.

## Revendications

1. Circuit comprenant :
un montage comparateur (200) configuré pour être couplé (OUTx, VOx) à une charge électrique (L) et pour mesurer (12, 12') un courant traversant la charge (L), le montage comparateur (200) étant configuré pour comparer l'intensité du courant mesuré avec un seuil de comparaison réglable (302) sur une première valeur de seuil (OVC_thr_1) et sur une deuxième valeur de seuil (OVC_thr_2), la deuxième valeur de seuil (OVC_thr_2) étant supérieure à la première valeur de seuil (OVC_thr_1),
un circuit logique (300) couplé au montage comparateur (200) pour recevoir de celui-ci un signal de comparaison ayant une première valeur si l'intensité du courant mesuré est inférieure au seuil de comparaison (OVC_thr_1, OVC_thr_2) et une deuxième valeur si l'intensité du courant mesuré est supérieure au seuil de comparaison (OVC_thr_1, OVC_thr_2),
dans lequel le circuit logique (300) comprend :
un montage de réglage de seuil (302) configuré pour régler le seuil de comparaison (OVC_thr_1, OVC_thr_2) du montage comparateur (200) alternativement sur la première valeur de seuil (OVC_thr_1) et sur la deuxième valeur de seuil (OVC_thr_2),
un montage de traitement (303 à 308) configuré pour traiter le signal de comparaison du montage comparateur (200), et :
activer (114) un premier signal d'évènement de surintensité (OVC_1_Fault) si le signal de comparaison du montage comparateur (200) a ladite deuxième valeur avec le seuil de comparaison (OVC_thr_1, OVC_thr_2) réglé sur la première valeur de seuil (OVC_thr_1) et s'il a ensuite ladite première valeur avec le seuil de comparaison (OVC_thr_1, OVC_thr_2) consécutivement réglé sur la deuxième valeur de seuil (OVC_thr_2),
activer (112) un deuxième signal d'évènement de surintensité (OVC_2_Fault) si le signal de comparaison du montage comparateur (200) a ladite deuxième valeur à la fois avec le seuil de comparaison (OVC_thr_1, OVC_thr_2) réglé sur la première valeur de seuil (OVC_thr_1) et s'il a toujours ladite deuxième valeur avec le seuil de comparaison (OVC_thr_1, OVC_thr_2) réglé ensuite sur la deuxième valeur de seuil (OVC_thr_2).

2. Circuit selon la revendication 1, dans lequel le montage de réglage de seuil (302) est configuré pour régler le seuil de comparaison du montage comparateur (200) sur la deuxième valeur de seuil (OVC_thr_2) si le montage de traitement (303 à 308) détecte que le signal de comparaison du montage comparateur (200) a ladite deuxième valeur avec le seuil de comparaison (OVC_thr_1, OVC_thr_2) réglé sur la première valeur de seuil (OVC_thr_1).

3. Circuit selon la revendication 1 ou 2, dans lequel le montage de traitement (303 à 308) comprend :
un premier circuit de filtre temporel (305, 303) configuré pour activer le premier signal d'évènement de surintensité (OVC_1_Fault) si le signal de comparaison du montage comparateur (200) a ladite deuxième valeur avec le seuil de comparaison (OVC_thr_1, OVC_thr_2) réglé sur la première valeur de seuil (OVC_thr_1) et ladite première valeur avec le seuil de comparaison (OVC_thr_1, OVC_thr_2) réglé sur la deuxième valeur de seuil (OVC_thr_2) pendant un premier intervalle de temps,
un deuxième circuit de filtre temporel (308, 306) configuré pour activer le deuxième signal d'évènement de surintensité (OVC_2_Fault) si le signal de comparaison du montage comparateur (200) a ladite deuxième valeur à la fois avec le seuil de comparaison (OVC_thr_1, OVC_thr_2) réglé sur la première valeur de seuil (OVC_thr_1) et avec le seuil de comparaison (OVC_thr_1, OVC_thr_2) réglé sur la deuxième valeur de seuil (OVC_thr_2) pendant un deuxième intervalle de temps, ledit premier intervalle de temps étant plus long que ledit deuxième intervalle de temps.

4. Circuit selon la revendication 3, dans lequel le montage de traitement (303 à 308) est configuré pour activer le premier circuit de filtre temporel (305, 303) en même temps que le montage de réglage de seuil (302) règle le seuil de comparaison (OVC_thr_1, OVC_thr_2) du montage comparateur (200) sur la deuxième valeur de seuil (OVC_thr_2).

5. Circuit selon l'une quelconque des revendications précédentes, dans lequel le montage de traitement (303 à 308) est configuré pour activer (116) un signal de fin d'évènement de surintensité si le signal de comparaison du montage comparateur (200) a ladite première valeur avec le seuil de comparaison (OVC_thr_1, OVC_thr_2) réglé sur la deuxième valeur de seuil (OVC_thr_2).

6. Système comprenant :
une charge électrique (L),
un circuit de pilotage (10) couplé (OUTx, VOx) à la charge électrique (L), le circuit de pilotage (10) étant configuré (12) pour commander la circulation de courant dans la charge électrique (L), dans lequel le circuit de pilotage (10) comprend un circuit (200, 300) selon l'une quelconque des revendications 1 à 5 ayant ledit montage comparateur (200) couplé (OUTx, VOx) à la charge électrique (L) pour mesurer (12, 12') le courant circulant dans la charge (L),
dans lequel le circuit de pilotage (10) est configuré pour contrer une surintensité circulant dans la charge (L) sélectivement :
dans un premier mode de surintensité (114), si ledit premier signal d'évènement de surintensité (OVC_1_Fault) est activé, ou
dans un deuxième mode de surintensité (112), si ledit deuxième signal d'évènement de surintensité (OVC_2_Fault) est activé.

7. Procédé de mise en œuvre d'un circuit (200, 300) selon l'une quelconque des revendications 1 à 5 ou d'un système selon la revendication 6, le procédé comprenant les étapes suivantes :
employer ledit montage comparateur (200) pour comparer l'intensité du courant mesuré avec ledit seuil de comparaison, en réglant ledit seuil de comparaison alternativement sur la première valeur de seuil (OVC_thr_1) et sur la deuxième valeur de seuil (OVC_thr_2),
détecter l'activation dudit premier signal d'évènement de surintensité (OVC_1_Fault) ou dudit deuxième signal d'évènement de surintensité (OVC_2_Fault) par ledit montage de traitement (303 à 308),
déclarer l'occurrence d'un court-circuit faible au niveau de la charge électrique (L) si le premier signal d'évènement de surintensité (OVC_1_Fault) est activé, et
déclarer l'occurrence d'un court-circuit fort au niveau de la charge électrique (L) si le deuxième signal d'évènement de surintensité (OVC_2_Fault) est activé.
